# EUROPEAN PATENT APPLICATION

(11) **EP 4 440 186 A1**
(43) Date of publication of application: **02.10.2024**
(21) Application number: 22898410.0
(22) Date of filing: 10.11.2022
(51) Int. Cl.: H04W 24/10, H04W 16/28, H04W 72/20, H04W 84/12

(54) **WIRELESS COMMUNICATION DEVICE AND METHOD, AND WIRELESS COMMUNICATION TERMINAL AND METHOD**

(30) Priority: 25.11.2021 JP 2021191149
(71) Applicant: Sony Group Corporation, Tokyo 108-0075 (JP)
(72) Inventor: SUGAI Ren, Tokyo 108-0075 (JP); AIO Kosuke, Tokyo 108-0075 (JP); HIRATA Ryuichi, Tokyo 108-0075 (JP); TANAKA Yusuke, Tokyo 108-0075 (JP)
(74) Representative: D Young & Co LLP
(86) International application number: PCT/JP2022/041873
(87) International publication number: WO 2023/095626

(57) **Abstract**

The present technology relates to a wireless communication device and a method, and a wireless communication terminal and a method in which sounding is capable of being implemented efficiently.

A wireless communication device controls transmission of antenna operation information to a wireless communication terminal, the antenna operation information being information regarding operation of an antenna for sounding in an enhanced multi-link multi-radio (EMLMR) mode. The present technology can be applied to a wireless communication system.

## Description

### TECHNICAL FIELD

The present technology relates to a wireless communication device and a method, and a wireless communication terminal and a method, and more particularly relates to a wireless communication device and a method, and a wireless communication terminal and a method, in which sounding is capable of being implemented efficiently.

### BACKGROUND ART

As a method for coping with a high transmission speed or a delay request in X Reality (XR), there is multi-link operation (MLO) using a plurality of links in different frequency bands (for example, 2.4 GHz band, 5 GHz band, and 6 GHz band). The "link" is a wireless transmission path through which data can be transmitted between two wireless communication devices.

In MLO, by using a plurality of links and using Multi Input Multi Output (MIMO) on each link, it is possible to increase a transmission opportunity to acquire a transmission right, increase communication capacity, and respond to these requests. A device corresponding to MLO is referred to as a multi-link device (MLD). MLD is a logical entity including two or more STAs, and has only one service access point (SAP) to an upper layer. MLD, in which each STA serves as AP, is referred to as AP MLD, and MLD, in which each STA serves as non-AP STA (STA), is referred to as non-AP MLD (STA MLD) .

AP (Access Point, Access Point Multi Link Device, AP-MLD), which is generally a base station without restriction on a housing size, can be equipped with a large number of antennas, and, for example, operates by being equipped with four antennas and allocating two antennas for MIMO to two links, respectively.

On the other hand, STA (Station, Station Multi Link Device, Non-AP Multi Link Device, Non-AP MLD, STA-MLD) which is generally a terminal having restriction on a housing size has a restriction on the number of antennas that can be equipped. STA is equipped with, for example, two antennas and operates by allocating one antenna to each of two links, or operates by allocating two antennas to one link for MIMO. Hereinafter, the former operation mode is referred to as a default MLO mode, and the latter operation mode is referred to as a legacy mode.

In the case of the default MLO mode, MIMO cannot be used for communication, and the transmission speed is limited. In the case of the Legacy mode, there is one communicable link, and the link on which AP can acquire a transmission opportunity is limited.

With this, a function called enhanced multi-link multi-radio (EMLMR) has been proposed. In the EMLMR function, first, STA MLD waits on two links.

STA MLD that receives a frame switches a mode to allocate two antennas to a link that receives the frame, and performs frame exchange by using AP MLD and MIMO. As a result, AP MLD can perform transmission by MIMO while maintaining the link capable of acquiring the transmission right. It is conceivable that STA MLD having the EMLMR function operates by switching between the EMLMR mode and the default MLO mode.

Here, in any mode, it is necessary to perform sounding (estimate characteristics of a radio wave propagation path) of a channel for each antenna to be used on each link. Hereinafter, the sounding of the channel is simply referred to as sounding.

However, since an antenna is shared by a plurality of links in the EMLMR mode, only sounding on a specific link can be performed at the time of sounding.

Note that in a mode other than the EMLMR mode, similar sounding is required in order to determine whether a spatial multiplexing number can be secured in a case where the mode is switched to the EMLMR mode.

Patent Document 1 discloses a method for providing a control method when a communication device transitions to another frequency band and channel in a multi-band wireless network.

However, in the technology of Patent Document 1, a configuration such as an EMLMR function in which an antenna is shared is not considered, and coping with a link for each antenna and a channel sounding method are not clarified.

Non-Patent Document 1 discloses a sounding procedure in the EMLMR function. Non-Patent Document 1 discloses the following three points.
(1) AP MLD does not start sounding on STA MLD having the EMLMR function at a timing that temporally overlaps sounding that has already started.
(2) Whether STA MLD having the EMLMR function can simultaneously perform sounding on a plurality of links is notified with capability information.
(3) In a case where AP MLD simultaneously receives an NDP announcement (NDP-A) notifying transmission of a null data packet (NDP) as a known signal and NDP on a plurality of links, STA MLD performs a sounding request on one of the links again.

### CITATION LIST

### PATENT DOCUMENT

Patent Document 1: Japanese Patent Application Laid-Open No. 2011-254458

### NON-PATENT DOCUMENT

Non-Patent Document 1: Sharan Naribole, Srinivas Kandala, Wook Bong Lee, Ashok Ranganath, "Spatial Multiplexing Considerations", IEEE 802.11-20/0977R2, Jul.15,2020, Internet retrieval <https://mentor.ieee.org/802.11/documents?is_dcn=977&is_y ear=2020> retrieved on August 16, 2021

### SUMMARY OF THE INVENTION

### PROBLEMS TO BE SOLVED BY THE INVENTION

However, in the sounding procedure disclosed in Non-Patent Document 1, the sounding of a channel cannot be completed within a single communication section, and there is a possibility that the channel fluctuates until a communication opportunity to perform the next sounding is obtained. Furthermore, when STA MLD performs sounding, it is difficult to determine whether sounding is in the EMLMR mode or in the default MLO mode.

The present technology is achieved in view of such a condition and an object thereof is to implement efficient sounding.

### SOLUTIONS TO PROBLEMS

According to an aspect of the present technology, there is provided a wireless communication device including a communication control unit configured to control transmission of antenna operation information to a wireless communication terminal, the antenna operation information being information regarding operation of an antenna for sounding in an EMLMR mode.

According to another aspect of the present technology, there is provided a wireless communication terminal including a communication control unit configured to switch operation of an antenna on the basis of antenna operation information which is information regarding operation of the antenna for sounding in an EMLMR mode, the information being transmitted from a wireless communication device.

In an aspect of the present technology, the transmission of the antenna operation information, which is information regarding the operation of the antenna for sounding in the EMLMR mode, to the wireless communication terminal is controlled.

In another aspect of the present technology, the operation of the antenna is switched on the basis of the antenna operation information which is information regarding the operation of the antenna for sounding in the EMLMR mode, the information being transmitted from the wireless communication device.

### BRIEF DESCRIPTION OF DRAWINGS

Fig. 1 is a diagram illustrating a configuration example of a wireless communication system according to an embodiment of the present technology.
Fig. 2 is a block diagram illustrating a configuration example of a wireless communication device to which the present technology is applied.
Fig. 3 is a block diagram illustrating another configuration example of a wireless communication device corresponding to an EMLMR mode.
Fig. 4 is a diagram illustrating a sounding sequence on a plurality of links assumed as a multi-link of the related art.
Fig. 5 is a diagram illustrating a sounding sequence on a single link assumed as a multi-link of the related art.
Fig. 6 is a diagram illustrating a simultaneous sounding sequence on a plurality of links to which the present technology is applied.
Fig. 7 is a diagram illustrating a modification example of a simultaneous sounding sequence on a plurality of links to which the present technology is applied.
Fig. 8 is a diagram illustrating a first configuration example of an NDP-A frame.
Fig. 9 is a diagram illustrating a second configuration example of an NDP-A frame.
Fig. 10 is a diagram illustrating a third configuration example of an NDP-A frame.
Fig. 11 is a diagram illustrating a configuration example of a link switch frame.
Fig. 12 is a flowchart illustrating sounding processing of AP MLD.
Fig. 13 is a flowchart illustrating sounding processing of STA MLD.
Fig. 14 is a diagram illustrating a sounding sequence on a single link to which the present technology is applied.
Fig. 15 is a block diagram illustrating a configuration example of a computer.

### MODE FOR CARRYING OUT THE INVENTION

Hereinafter, modes for carrying out the present technology will be described. The description will be given in the following order.
1. System configuration and device configuration
2. Related art
3. First embodiment
4. Second embodiment
5. Others

### <1. System configuration and device configuration>

### <Configuration example of wireless communication system>

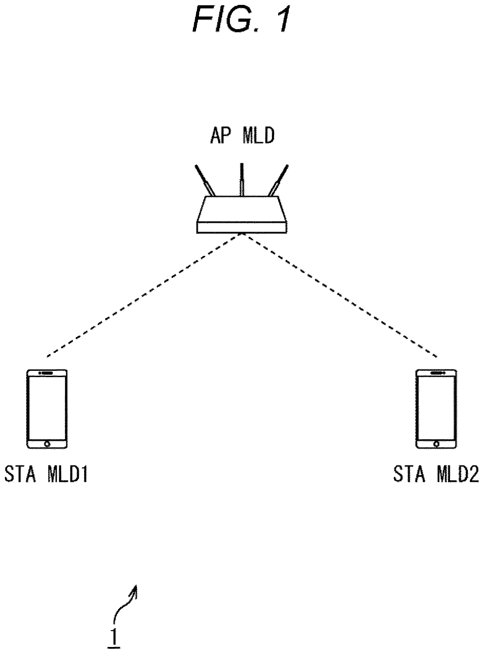

Fig. 1 is a diagram illustrating a configuration example of a wireless communication system according to an embodiment of the present technology.

In the wireless communication system of Fig. 1, data is transmitted and received by wireless communication using one or a plurality of links (MLO).

For example, when MLO is performed, individual links are selected from among a plurality of wireless transmission paths divided in a frequency band and independent from each other. For example, channels selected in advance from among a plurality of channels included in any band of frequency bands (simply, referred to as band) such as 2.4 GHz band, 5 GHz band, 6 GHz band, and 920 MHz band are used on the individual links.

The wireless communication system of Fig. 1 includes one AP MLD and two of STA MLD1 and STA MLD2. Note that the number of STA MLDs is an example, and is not limited to two. STA MLD1 and STA MLD2 are connected to AP MLD.

AP MLD is a wireless communication device that operates as a base station. AP MLD has a function corresponding to MLO operation, and can switch the MLO operation described above (MLO mode including an EMLMR mode, a default MLO mode, and a legacy mode).

STA MLD1 and STA MLD2 are wireless communication devices that operate as terminals. STA MLD1 and STA MLD2 have a function corresponding to at least one of an MLO operation and a single-link communication operation.

In a case of having a function corresponding to the MLO operation, STA MLD1 and the STA MLD2 can also switch the MLO operation including the EMLMR mode, the default MLO mode, and the legacy mode described above.

### <Configuration of device>

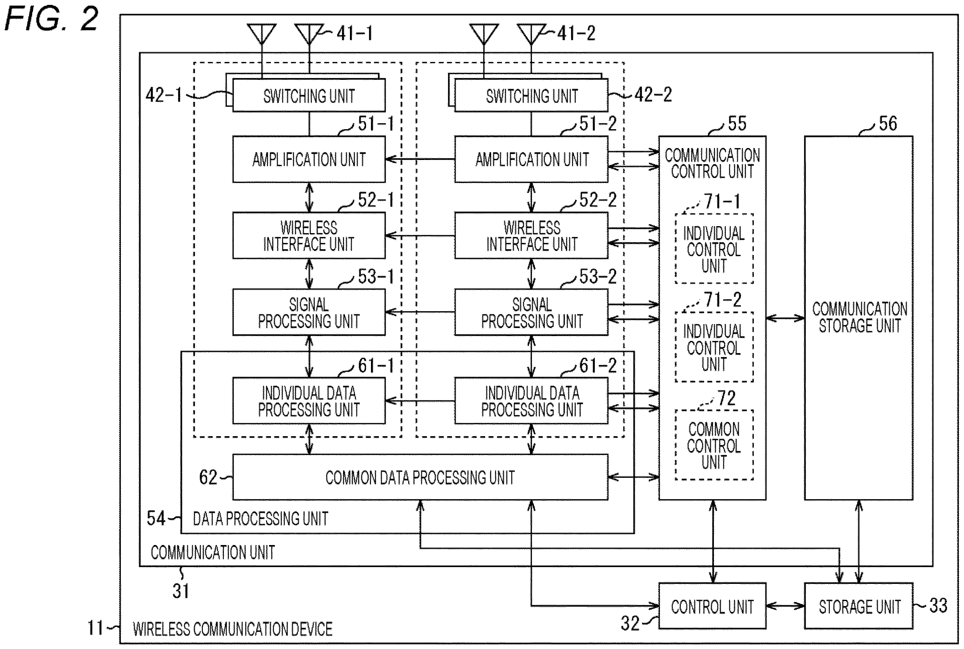

Fig. 2 is a block diagram illustrating a configuration example of a wireless communication device to which the present technology is applied.

A wireless communication device 11 illustrated in Fig. 2 is a wireless communication device that operates as AP MLD or STA MLD.

The wireless communication device 11 includes a communication unit 31, a control unit 32, a storage unit 33, antenna groups 41-1 and 41-2, and switching units 42-1 and 42-2. The operation of the antenna groups 41-1 and 41-2 is changed by the switching units 42-1 and 42-2, respectively. The antenna groups 41-1 and 41-2 will be referred to as an antenna group 41 in a case where there is no need to be distinguished, and will be referred to as an antenna 41 in a case where there is no need to be distinguished for the number of antennas. The switching units 42-1 and 42-2 are referred to as a switching unit 42 in a case where there is no need to be distinguished.

The communication unit 31 transmits and receives data. The communication unit 31 includes amplification units 51-1 and 51-2, a wireless interface unit 52-1 and a wireless interface unit 52-2, and signal processing units 53-1 and 53-2. Furthermore, the communication unit 31 includes a data processing unit 54, a communication control unit 55, and a communication storage unit 56.

Note that the amplification units 51-1 and 51-2, the wireless interface units 52-1 and 52-2, and the signal processing units 53-1 and 53-2 are referred to as an amplification unit 51, a wireless interface unit 52, and a signal processing unit 53, respectively, in a case where there is no need to be distinguished.

At the time of transmission, the amplification unit 51 amplifies an analog signal supplied from the wireless interface unit 52 up to predetermined power, and outputs the analog signal with the amplified power to the antenna group 41. At the time of reception, the amplification unit 51 amplifies an analog signal supplied from the antenna group 41 up to predetermined power, and outputs the analog signal with the amplified power to the wireless interface unit 52.

A part of the function of the amplification unit 51 may be included in the wireless interface unit 52. Furthermore, a part of the function of the amplification unit 51 may be a component outside the communication unit 31.

At the time of transmission, the wireless interface unit 52 converts a transmission symbol stream from the signal processing unit 53 into an analog signal, performs filtering, up-conversion to a carrier frequency, and phase control, and outputs the analog signal subjected to the phase control to the amplification unit 51.

At the time of reception, the wireless interface unit 52 performs phase control, down-conversion, and reverse filtering on an analog signal supplied from the amplification unit 51, and outputs a reception symbol stream as a result of conversion into a digital signal to the signal processing unit 53.

At the time of transmission, the signal processing unit 53 performs encoding, interleaving, modulation, and the like on a data unit supplied from the data processing unit 54, adds a physical header, and outputs a transmission symbol stream to each wireless interface unit 52.

At the time of reception, the signal processing unit 53 analyzes the physical header of a reception symbol stream supplied from each wireless interface unit 52, performs demodulation, deinterleaving, decoding, and the like on the reception symbol stream, and generates a data unit. The generated data unit is output to the data processing unit 54.

Note that the signal processing unit 53 performs complex channel characteristic estimation and spatial separation processing as necessary.

The data processing unit 54 includes individual data processing units 61-1 and 61-2 and a common data processing unit 62. In a case where it is not necessary to distinguish the individual data processing units 61-1 and 61-2, the individual data processing units 61-1 and 61-2 are referred to as an individual data processing unit 61.

At the time of transmission, the individual data processing unit 61 performs channel access operation based on carrier sensing, addition of a media access control (MAC) header and addition of an error detection code to data to be sent, and multiple concatenation processing of data units.

At the time of reception, the individual data processing unit 61 performs decoupling processing of a MAC header of a received data unit, analysis and error detection, and a retransmission requesting operation.

At the time of transmission, the common data processing unit 62 performs sequence management of data held in the communication storage unit 56 and control information and management information received from the communication control unit 55. Furthermore, the common data processing unit 62 performs encryption processing on the control information and the management information or the like to generate a data unit, and allocates the generated data unit to the individual data processing units 61-1 and 61-2.

At the time of reception, the common data processing unit 62 performs analysis processing and reorder processing on a data unit.

The antenna group 41, the amplification unit 51, the wireless interface unit 52, the signal processing unit 53, and the individual data processing unit 61 form one set (hereinafter, also referred to as an individual communication set) for each having the same branch number, as surrounded by a broken line. Each set is a component of the wireless communication device 11, and performs wireless communication on each link. Furthermore, the storage unit 33 may be included in each set. The individual communication set is referred to as AP (AP affiliated with AP MLD) or STA (STA affiliated with non-AP MLD).

Note that the operation of the individual data processing unit 61 and the operation of the common data processing unit 62 are not limited to the operations described above, and for example, one may perform the operation of the other. For example, the individual data processing unit 61 may be set such that all the functions of the common data processing unit 62 are implemented for every individual communication set.

Furthermore, the links used by the sets may have different bands. Furthermore, the signal processing unit 53 and individual data processing unit 61 may be configured to form one set for each having the same branch number and two or three or more of the sets may be configured to be connected to one wireless interface unit 52.

The communication control unit 55 controls the operation of each unit in the communication unit 31 and information transmission between the units. Furthermore, the communication control unit 55 performs control to transfer the control information and management information to be notified to a different wireless communication device to the individual data processing unit 61 and common data processing unit 62.

The communication control unit 55 includes individual control units 71-1 and 71-2 that control the individual communication sets, and a common control unit 72 that performs control common to the common data processing unit 62 and each individual communication set. In a case where it is not necessary to distinguish the individual control units 71-1 and 71-2, the individual control units 71-1 and 71-2 are collectively referred to as an individual control unit 71.

In the present technology, in a case where the wireless communication device 11 operates as AP MLD, the individual control unit 71 controls each unit so as to transmit antenna operation information, which is information regarding the operation of the antenna 41 in sounding in the EMLMR mode, to the wireless communication device operating as STA MLD. At this time, the control information for each unit may be transmitted via the common control unit 72.

The communication storage unit 56 holds information to be used by the communication control unit 55. Furthermore, the communication storage unit 56 holds the data to be transmitted and the received data.

The control unit 32 includes a central processing unit (CPU), a read only memory (ROM), and a random access memory (RAM). The control unit 32 executes a program stored in the ROM or the like, and controls the communication unit 31 and the communication control unit 55. Furthermore, the control unit 32 may also perform the partial operation of the communication control unit 55 instead. Furthermore, the communication control unit 55 and the control unit 32 may be configured as one block.

The storage unit 33 holds information used by the communication unit 31 and the control unit 32. Furthermore, the storage unit 33 may also perform the partial operation of the communication storage unit 56 instead. The storage unit 33 and the communication storage unit 56 may be configured as one block.

Note that the antenna group 41, the amplification unit 51, and the wireless interface unit 52 form one set for each having the same branch number, and without being limited to two sets, three or more sets may be components of the wireless communication device 11. Furthermore, the communication unit 31 is implemented by one or more LSIs.

The individual data processing unit 61 is also referred to as Lower MAC. The common data processing unit 62 is also referred to as Upper MAC or Higher MAC. Furthermore, a set of the individual data processing unit 61 and the common data processing unit 62 is also referred to as an AP entity or a STA entity. Furthermore, the communication control unit 55 is also referred to as a multi-link device (MLD) management entity.

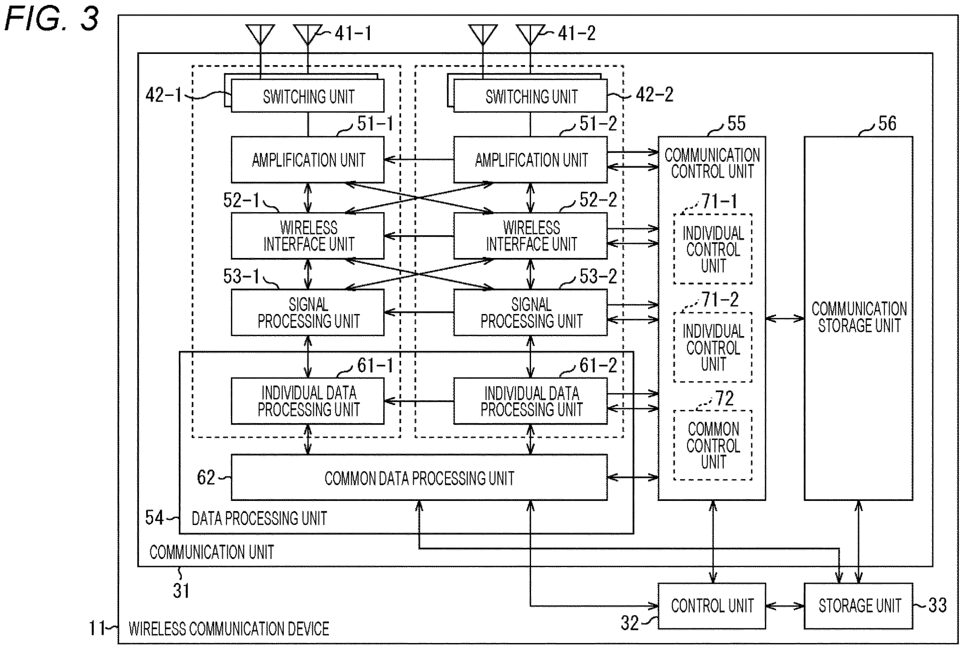

Fig. 3 is a block diagram illustrating another configuration example of the wireless communication device corresponding to the EMLMR mode.

The wireless communication device 11 of Fig. 3 is different only in that on which link the wireless interface unit 52, the amplification unit 51, and the antenna group 41, which are connected to the individual data processing unit 61 and the signal processing unit 53, are used is dynamically switched and the other parts are common to those in the wireless communication device 11 of Fig. 2.

That is, in a case where the wireless communication device 11 operates as STA MLD, the individual control unit 71 switches the operation of the antenna group 41 such that the antenna group 41 operates on the link on which sounding is performed, on the basis of the antenna operation information transmitted from the wireless communication device operating as AP MLD.

### <2. Related art>

### <Simultaneous sounding on plurality of links in related art>

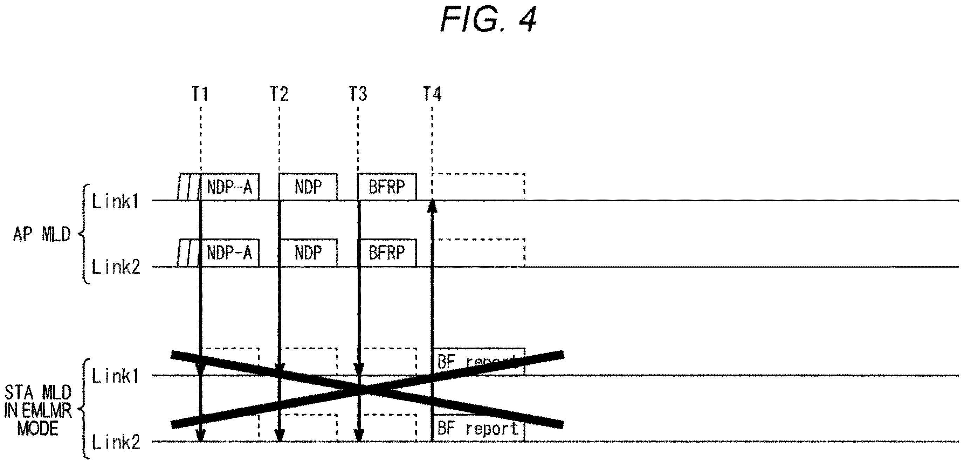

Fig. 4 is a diagram illustrating a simultaneous sounding sequence on a plurality of links in the related art.

Fig. 4 illustrates an example of a case where STA1 (STA1 affiliated with STA MLD) operating on Link1 and STA2 (STA2 affiliated with STA MLD) operating on Link2 among STAs belonging to STA MLD simultaneously perform sounding on a plurality of links (Link1 and Link2). That is, in the drawing, Link1 indicates the operation of STA1 belonging to STA MLD on Link1, and Link2 indicates the operation of STA2 belonging to STA MLD on Link2.

In Fig. 4, a solid-line rectangle indicates a frame to be transmitted, and an arrow coming from the frame indicates a transmission destination of the frame. Furthermore, a broken-line rectangle indicates that a frame is received at a transmission destination. The same applies to the drawings illustrating the subsequent sequences.

At time T1, AP MLD transmits, to STA MLD as a sounding target, an NDP-A frame notifying the implementation of sounding on a plurality of links that has acquired a transmission opportunity. Each STA belonging to STA MLD receives the NDP-A frame transmitted simultaneously on each link.

After the NDP-A transmission, AP MLD transmits an NDP frame, which is a signal for sounding, on a plurality of links at time T2. Each STA belonging to STA MLD acquires channel information by using the NDP frame simultaneously transmitted on each link.

At time T3, AP MLD transmits a beam forming report poll (BFRP) frame requesting transmission of the acquired channel information to STA MLD.

On the other hand, STA MLD needs to transmit a BF report frame that is a response of the BFRP frame at time T4. However, STA MLD corresponding to the EMLMR mode (hereinafter, referred to as STA MLD in the EMLMR mode) cannot perform this operation since each STA belonging to STA MLD shares the antenna group 41.

That is, even when it is possible to perform sounding on one of the links by using one antenna group 41-1, it is not possible to simultaneously perform sounding on two links.

### <Sounding on single link in related art>

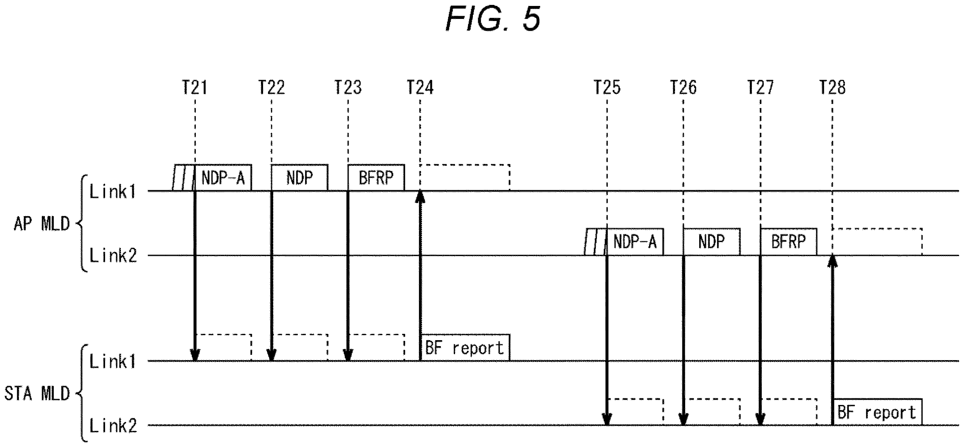

Fig. 5 is a diagram illustrating another sounding sequence assumed on a multi-link of the related art.

Fig. 5 illustrates an example of a case where sounding is performed on a single link.

At time T21, AP MLD transmits, to STA MLD as a sounding target, NDP-A on a link (Link1) that has acquired a transmission opportunity. STA1 belonging to STA MLD receives the NDP-A frame transmitted on Link1.

After the NDP-A transmission, AP MLD transmits an NDP frame, which is a signal for sounding, on Link1 at time T22. STA1 belonging to STA MLD acquires channel information by using the NDP frame transmitted on Link1.

At time T23, AP MLD transmits the BFRP frame and requests STA MLD to transmit the channel information.

STA1 belonging to STA MLD transmits a BF report frame that is a response of the BFRP frame. AP MLD and STA MLD similarly acquire a transmission opportunity on another link (Link2) at time T25 to time T28, and perform similar operations.

However, in the case of Fig. 5, STA MLD cannot determine whether sounding to be performed by AP MLD is sounding in the EMLMR mode or sounding in the default MLO mode.

### <3. First embodiment>

### <Simultaneous sounding on plurality of links in present technology>

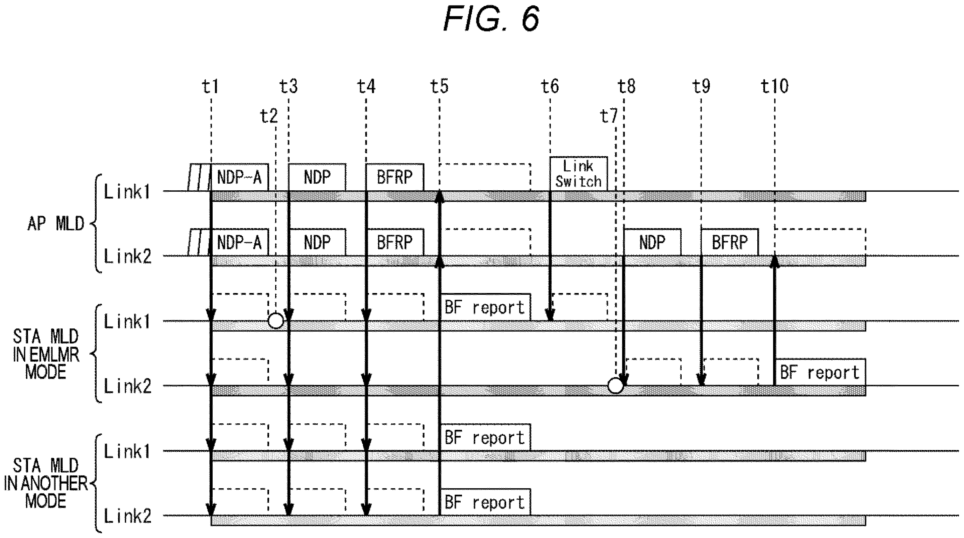

Fig. 6 is a diagram illustrating a sounding sequence to which the present technology is applied.

Fig. 6 illustrates an example of a case where sounding is simultaneously performed on a plurality of links in the wireless communication system of Fig. 1. In Fig. 6, a circle shown on the link of each STA belonging to STA MLD in the EMLMR mode indicates switching of the antenna operation. Furthermore, a hatched band on each link of each device indicates a section in which a network allocation vector (NAV), transmission prohibition period) is set.

In a case where sounding is performed on a STA MLD group including STA MLDs in the EMLMR mode, AP MLD transmits NDP-A to which antenna operation information is added on a plurality of links at time t1. The antenna operation information is information regarding the operation of the antenna 41 in sounding of the EMLMR mode. STA MLD in the EMLMR mode receives NDP-A transmitted from AP MLD on a plurality of the links.

At this time, AP MLD sets NAV on Link1 and Link2 until sounding is completed. STA MLD in the EMLMR mode also sets NAV on Link1 and Link2 until sounding is completed on the basis of the information described in the NDP-A frame.

The antenna operation information includes information indicating that STA MLD in the EMLMR mode is included in the STA MLD group that performs sounding, information indicating that its own sounding is sounding in the EMLMR mode, information indicating a link on which sounding is performed, information indicating continuation of sounding, and information specifying on which link the antenna 41 that is not used for sounding is to be operated.

The information indicating that STA MLD in the EMLMR mode is included in the STA MLD group that performs sounding is, for example, 1-bit flag information set in a case where STA MLD in the EMLMR mode is included in the STA MLD group that performs sounding, information specifically indicating the type of STA MLD group that performs sounding, or information specifically indicating the type of sounding.

The information indicating that its own sounding is sounding in the EMLMR mode is information included in an individual region for each STA MLD in a signal, 1-bit flag information set in a case where its own sounding is sounding in the EMLMR mode, or information specifying the type of sounding to be performed by itself.

The information indicating a link on which sounding is performed is information specifying a link on which STA MLD in the EMLMR mode performs sounding. On the basis of the information indicating a link on which this sounding is performed, STA MLD in the EMLMR mode switches the operation of the antenna 41 such that the antenna 41 operates on the link on which sounding is performed.

The information indicating continuation of sounding is information indicating whether sounding is performed on another link after sounding on a certain link, which is started from NDP-A, that is, information indicating the number of links on which STA MLD in the EMLMR mode performs sounding in the future.

Since the information indicating the continuation of this sounding is added, STA MLD can determine whether or not it is necessary to continue sounding also in a case where others exist in addition to STA MLD in the EMLMR mode.

The information specifying on which link the antenna 41 not used for sounding is to be operated is information specifying a link to be operated, information specifically specifying an antenna port to be operated, or information regarding the number of antennas 41 to be operated.

STA MLD in the EMLMR mode operates the antenna 41 that is not used for sounding on another link, and thus the blank section of NAV, which is a section in which NAV is not set, can be prevented from being generated on the link in which the antenna 41 is operated.

For example, in a case where the number of antennas 41 that are not used for sounding is smaller than the number of links, a blank section of NAV is generated due to sounding. Therefore, since AP MLD notifies STA MLD of information regarding the blank period of NAV, the blank period of NAV can be eliminated.

That is, the information specifying on which link the operation of the antenna 41 not used for this sounding is to be performed is information specifying a link on which STA MLD in the EMLMR mode grasps the state of NAV at the minimum.

At time t2, STA MLD in the EMLMR mode switches the operation of the antenna 41 such that the antenna 41 operates on Link1 on the basis of on information described in the NDP-A frame transmitted from AP MLD.

After the transmission of the NDP-A frame, AP MLD transmits an NDP frame on a plurality of Links at time t3. STA1 belonging to STA MLD receives the NDP frame transmitted from AP MLD on Link1, and acquires channel information by using the NDP frame.

At time t4, AP MLD transmits a BFRP frame on a plurality of Links and requests STA MLD to transmit the acquired channel information. STA1 belonging to STA MLD in the EMLMR mode receives the transmitted BFRP frame on Link1.

At time t5, STA MLD in the EMLMR mode transmits, on Link1, a BF report frame which is a response of the BFRP frame transmitted at time t4.

Note that STA MLD in another mode receives NDP-A transmitted at time t1 on a plurality of the links. At this time, STA MLD in another mode also sets NAV on Link1 and Link2 until sounding is completed on the basis of the information described in the NDP-A frame.

STA MLD in another mode receives the NDP frame transmitted at time t3 on a plurality of the links, and acquires channel information by using the NDP frame.

STA MLD in another mode receives the BFRP frame transmitted from AP MLD at time t4 on a plurality of Links. Thereafter, at time t5, each STA belonging to STA MLD in another mode transmits a BF report frame on each Link.

At time t6, AP MLD transmits a link switch frame, which is a signal including antenna operation information and requesting switching of a sounding link, to STA MLD in the EMLMR mode on Link1.

The link switch frame is transmitted only to STA MLD having a link on which sounding is not completed among STA MLDs in the EMLMR mode on the link being operated. The link switch frame is not transmitted to STA MLD in a mode other than EMLMR mode and STA MLD for which sounding has already been completed on all links.

Similarly to the NDP-A frame, the link switch frame includes, as antenna operation information, information indicating that STA MLD in the EMLMR mode is included in the STA MLD group that performs sounding, information indicating that its own sounding is sounding in the EMLMR mode, information indicating a link on which sounding is performed, information indicating continuation of sounding, and information specifying on which link the antenna 41 that is not used for sounding is to be operated.

The link switch frame further includes, as the antenna operation information, information regarding NAV on a certain link, and information requesting transmission of NAV information on a certain link.

The information regarding NAV on a certain link is, for example, information regarding the length of a difference between the length of NAV of STA MLD under control on a certain link and the current time of Time stamp.

STA MLD in the EMLMR mode can interpolate a blank period of NAV information generated by sounding by receiving information regarding NAV of peripheral STA MLD from AP MLD.

The information requesting transmission of the NAV information on a certain link is, for example, the above-described information requesting STA MLD under control to transmit the length of NAV on a certain link in order to generate information regarding NAV on a certain link.

STA MLD in the EMLMR mode performs sounding in the EMLMR mode on the basis of the antenna operation information of the link switch frame at times t7 to t10.

Therefore, STA MLD in the EMLMR mode can determine on which link its own antenna 41 should be operated, the sounding operation can be implemented in a single communication section, and efficient sounding can be implemented.

That is, at time t7, STA MLD in the EMLMR mode switches the operation of the antenna 41 such that the antenna 41 operates on Link2 on the basis of on the antenna operation information described in the link switch frame transmitted from AP MLD. At this time, STA MLD in the EMLMR mode may set NAV again on Link1 and Link2 on the basis of the information described in the link switch frame.

After the transmission of the link switch frame, AP MLD transmits the NDP frame on Link2 at time t8. STA2 belonging to STA MLD receives the NDP frame transmitted from AP MLD on Link2, and acquires channel information by using the NDP frame.

At time t9, AP MLD transmits the BFRP frame on Link2 and requests STA MLD to transmit the acquired channel information. STA2 belonging to STA MLD in the EMLMR mode receives the transmitted BFRP frame on Link2.

Thereafter, at time t10, STA MLD in the EMLMR mode transmits, on Link2, the BF report frame which is a response of the BFRP frame transmitted at time t9.

As described above, since the antenna operation information is transmitted to STA MLD, STA MLD can switch the antenna operation on the basis of the antenna operation information, unlike the related art described above with reference to Fig. 4.

Therefore, since sounding in the EMLMR mode can be performed, the efficient sounding can be implemented even for STA MLD in the EMLMR mode.

### <Modification example of simultaneous sounding on plurality of links in present technology>

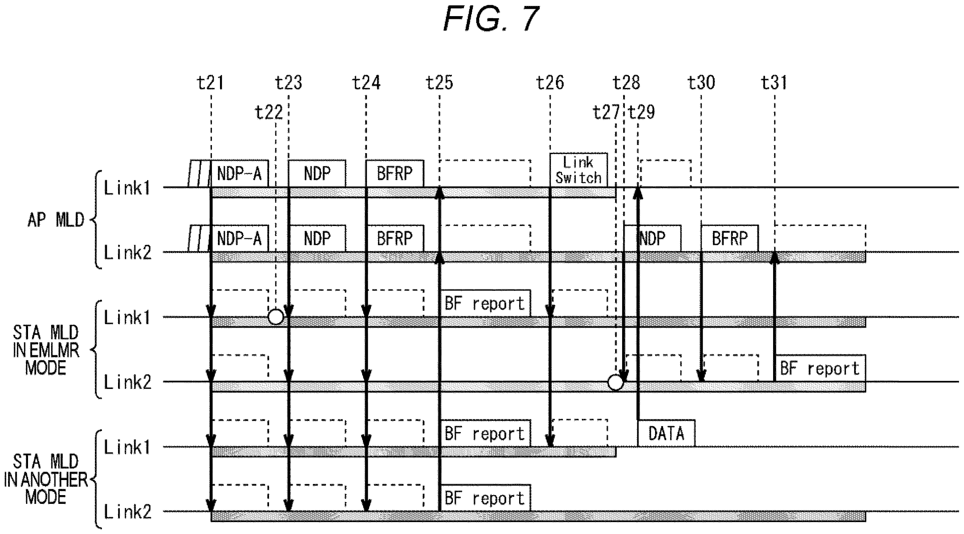

Fig. 7 is a diagram illustrating a modification example of a sounding sequence to which the present technology is applied.

In Fig. 6, as described above, the link switch frame is not transmitted to STA MLD in a mode other than EMLMR mode and STA MLD for which sounding has already been completed on all links. In Fig. 7, the link switch frame is also transmitted to STA MLD for which sounding has already been completed on all links in STA MLD in a mode other than the EMLMR mode and STA MLD in the EMLMR mode.

Since the processing similar to that at time t1 to time t5 in Fig. 6 is performed at time t21 to time t25 in Fig. 7, the description thereof will be omitted.

That is, AP MLD transmits the link switch frame to all STA MLDs on Link1 at time t26. In this case, the antenna operation information of the link switch frame includes information notifying completion of sounding.

The information notifying completion of this sounding may be information transmitted to all terminals, such as a contention free (CF)-END frame, or may be information addressed to an individual STA MLD transmitted to a specific STA MLD.

For example, in a case where information regarding NAV is exchanged on a link on which sounding has been completed, AP MLD transmits a link switch frame including information notifying a specific STA MLD of completion of sounding and information requesting transmission of NAV information on a certain link. Note that at time t27 after the transmission of the link switch frame including the information notifying completion of sounding, AP MLD releases NAV on Link1 thereafter.

As in Fig. 6, STA MLD in the EMLMR mode performs sounding in the EMLMR mode on Link2 on the basis of the antenna operation information of the link switch frame at times t27 to t30.

On the other hand, at time t27 when the link switch frame transmitted at time t26 is received, the specific STA MLD releases NAV on Link1 thereafter on the basis of the link switch frame, and at time t29, transmits a DATA frame including the requested NAV information on Link1 on which the link switch frame is transmitted.

Note that at this time, although the DATA frame cannot be transmitted, NAV on Link1 may be released on the basis of the link switch frame also in STA MLD in the EMLMR mode.

As described above, wireless resources can be more effectively utilized by using Link1 not used for sounding for other communications.

### <First configuration example of NDP-A frame>

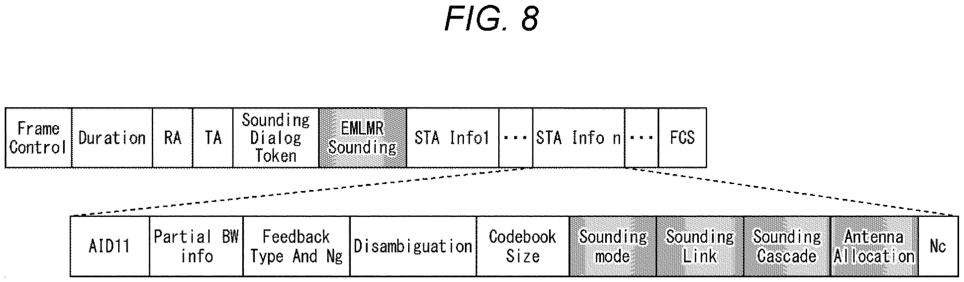

Fig. 8 is a diagram illustrating a first configuration example of an NDP-A frame.

Fig. 8 illustrates a configuration example of the NDP-A frame in a case where information indicating that STA MLD in the EMLMR mode is included in a STA MLD group that performs sounding is stored in a part of Frame body of the NDP-A.

The NDP-A frame in Fig. 8 includes fields of Frame Control, Duration, RA, TA, Sounding Dialog Token, EMLMR Sounding, STA Info 1 to STA Info n, and FCS.

Frame Control includes information indicating that this frame is the NDP-A frame.

Duration includes information regarding the length of this frame.

RA includes reception destination address information. TA includes transmission destination address information.

Sounding Dialog Token includes information of NDP and an identification number of a series of processing.

EMLMR Sounding is information indicating that STA MLD in the EMLMR mode is included in an STA MLD group that performs sounding, and in the case of Fig. 8, EMLMR Sounding is disposed at this position (that is, a part of Frame body).

STA Info includes information (STA identifier, measurement band, feedback information amount, and the like) for each STA MLD from which the NDP frame is received and measured.

The field of STA Info includes sub fields of Association ID (AID) 11, Partial BW info, Feedback Type And Ng, Disambiguation, Codebook Size, Sounding mode, Sounding Link, Sounding Cascade, Antena Allocation, and Nc.

AID 11 includes an identifier (AID) of STA MLD.

Partial BW info includes information indicating a measurement band.

Feedback Type And Ng includes feedback information.

Disambiguation includes information for preventing STA MLD from erroneously determining AID.

Codebook Size includes information indicating a size of a codebook.

Sounding mode includes information indicating whether or not its own sounding is sounding in the EMLMR mode.

Sounding Link includes information indicating a link on which sounding is performed.

Sounding Cascade includes information indicating continuation of the sounding operation.

Antena Allocation includes information specifying on which link the antenna 41 that is not used for sounding is to be operated.

Note that Sounding mode, Sounding Link, Sounding Cascade, and Antena Allocation may be included in this NDP-A frame in a form of an element.

Number of columns (NC) includes information regarding the number of columns.

The field of FCS includes an error correction code.

Note that as described above, the information indicating that the frame is the NDP-A frame in which the antenna operation information is stored may be indicated in the NDP-A frame. The information indicating that that frame is the NDP-A frame in which the antenna operation information is stored is specified by, for example, Frame control or Sounding Dialog token.

### <Second configuration example of NDP-A frame>

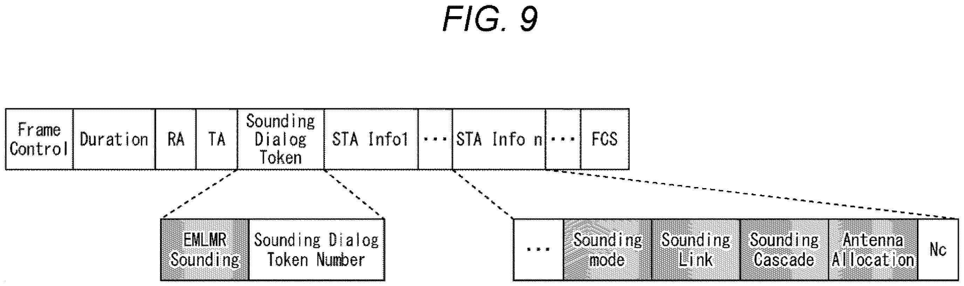

Fig. 9 is a diagram illustrating a second configuration example of an NDP-A frame.

Fig. 9 illustrates a configuration example of the NDP-A frame in a case where information indicating that STA MLD in the EMLMR mode is included in a STA MLD group that performs sounding is stored in a part of Sounding Dialog Token.

The NDP-A frame includes fields of Frame Control, Duration, RA, TA, Sounding Dialog Token, STA Info 1 to STA Info n, and FCS. Note that the description of parts common to Fig. 8 will be omitted.

The NDP-A frame in Fig. 9 is different from the NDP-A frame in Fig. 8 in that EMLMR Sounding disposed in a part of Frame body is removed and EMLMR Sounding is included in a part of Sounding Dialog Token.

That is, in Fig. 9, Sounding Dialog Token includes sub fields of EMLMR Sounding and Sounding Dialog Token Number, which are information indicating that STA MLD in the EMLMR mode is included in the STA MLD group that performs sounding.

Sounding Dialog Token Number includes an identification number of NDP-A.

### <Third configuration example of NDP-A frame>

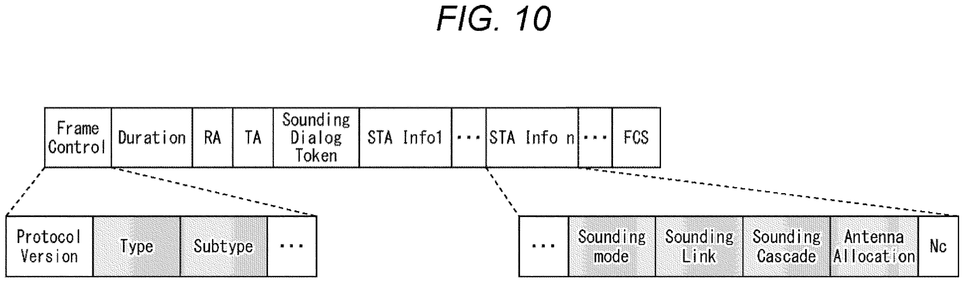

Fig. 10 is a diagram illustrating a third configuration example of an NDP-A frame.

Fig. 10 illustrates a configuration example of the NDP-A frame in a case where information indicating that STA MLD in the EMLMR mode is included in a STA MLD group that performs sounding is stored in a part of Frame Control.

The NDP-A frame includes fields of Frame Control, Duration, RA, TA, Sounding Dialog Token, STA Info 1 to STA Info n, and FCS. Note that the description of parts common to Fig. 8 will be omitted.

The NDP-A frame in Fig. 10 is different from the NDP-A frame in Fig. 8 in that EMLMR Sounding disposed in a part of Frame body is removed and EMLMR Sounding is included in a part of Frame Control.

That is, in Fig. 10, Frame Control includes sub fields of Protcol version, Type, and Sub Type.

In Type and Sub Type, information indicating that STA MLD in the EMLMR mode is included in a STA MLD group that performs sounding is included as additional information of information indicating an NDP-A frame. Type and Sub Type are information defining what type of frame the frame is by using a combination of values.

Note that there is a case where information indicating that STA MLD in the EMLMR mode is included in the STA MLD group that performs sounding is stored instead of the information indicating NDP-A. In this case, not "NDP-A" but "NDP-A storing information indicating that STA MLD in the EMLMR mode is included in the STA MLD group that performs sounding" is separately defined by using a combination of Type and Sub Type, and the value thereof is specified.

### <Configuration example of link switch frame>

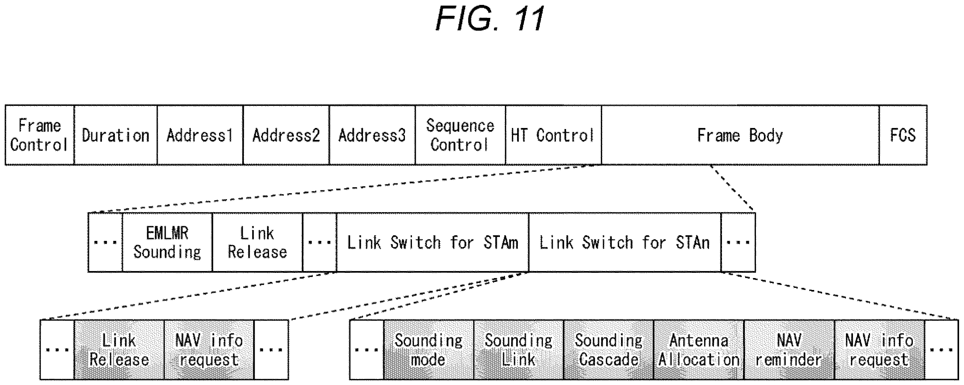

Fig. 11 is a diagram illustrating a configuration example of a link switch frame.

In Fig. 11, the link switch frame includes fields of Frame Control, Duration, Address1 to Address3, Sequence Control, High Throughput (HT) Control, Frame Body, and FCS.

Frame Control includes information indicating that this frame is the link switch frame.

Duration includes information regarding the length of this frame.

Address1 to Address3 include, for example, the address of the destination device.

Sequence Control includes information for controlling a sequence.

HT Control includes, for example, information necessary for decoding processing in a case where a network code is applied.

Frame Body includes a data portion of the Link Switch frame.

Frame Body includes, for example, sub fields of EMLMR Sounding, Link Release,..., Link swich for STA m, Link swich for STA n,..., and the like.

EMLMR Sounding includes information indicating that it is sounding related to the EMLMR mode. Information included in EMLMR Sounding is information common to all STA MLDs.

Link Release includes information notifying completion of sounding. This Link Release is, for example, a sub field disposed in a case where Link Release is information transmitted to all terminals. That is, in a case where Link Release is information transmitted to all the terminals, Link Release is included in this sub field which is a region common to all STA MLDs.

Link swich for STA m and Link swich for STA n are sub fields in which individual information is disposed for each STA MLD.

Link swich for STA m includes Link Release and NAV info request.

Link Release includes information notifying completion of sounding. This Link Release is disposed in a case of being transmitted to STA m that is a specific STA MLD. That is, in a case where Link Release is transmitted to a specific STA MLD, Link Release is disposed in Link swich for STA m which is a region addressed to STA MLD for each Link Release.

NAV info request includes information requesting transmission of NAV information on a certain link.

Similarly to STA Info in Fig. 8, Link swich for STA n includes Sounding mode, Sounding Link, Sounding Cascade, and Antena Allocation. Moreover, Link swich for STA n includes NAV reminder and NAV info request.

NAV reminder includes information regarding a length of a difference between the length of NAV of STA MLD under control on a certain link and the current time of Time stamp.

As described above, NAV info request includes information requesting transmission of NAV information on a certain link.

Note that information indicating that the frame is the link switch frame may be indicated in this link switch frame. The information indicating that the frame is the link switch frame is specified by, for example, Frame control.

### <Processing of AP MLD>

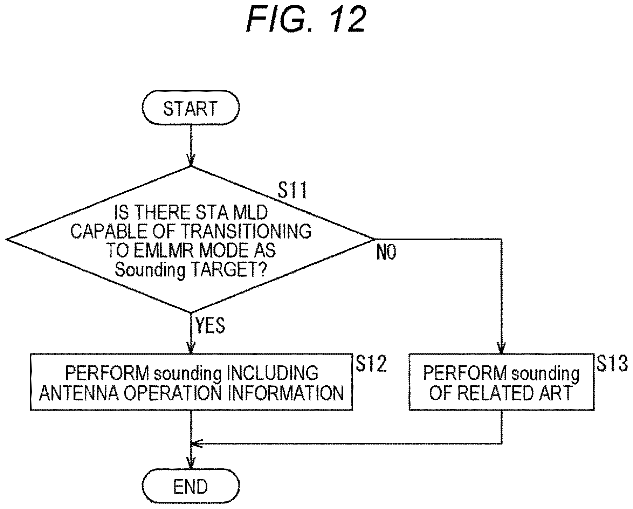

Fig. 12 is a flowchart illustrating sounding processing of AP MLD.

In step S11, the communication control unit 55 of AP MLD determines whether or not STA MLD that can transition to the EMLMR mode exists as a sounding target. For the determination in step S11, capability information notified from STA MLD at the time of Association establishment is used.

In a case where it is determined in step S11 that STA MLD that can transition to the EMLMR mode exists as the sounding target, the processing proceeds to step S12.

In step S12, each individual control unit 71 of the communication control unit 55 performs sounding (Fig. 6 or Fig. 7) including the antenna operation information.

In a case where it is determined in step S11 that STA MLD that can transition to the EMLMR mode does not exist as the sounding target, the processing proceeds to step S13.

In step S13, each individual control unit 71 of the communication control unit 55 performs sounding of the related art.

After Steps S12 or S13, the processing ends.

### <Processing of STA MLD>

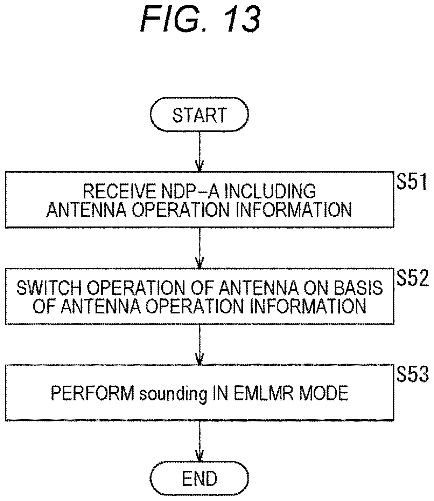

Fig. 13 is a flowchart illustrating the sounding processing of STA MLD.

In step S51, the communication control unit 55 of STA MLD receives NDP-A including the antenna operation information.

In step S52, on the basis of the antenna operation information, each individual control unit 71 of the communication control unit 55 switches the operation of the antenna 41 such that the antenna 41 operates on the link on which sounding is performed.

In step S53, each individual control unit 71 of the communication control unit 55 performs sounding in the EMLMR mode on the basis of the antenna operation information.

After steps S53, the sounding processing ends.

### <4. Second embodiment>

### <Sounding on single link of present technology>

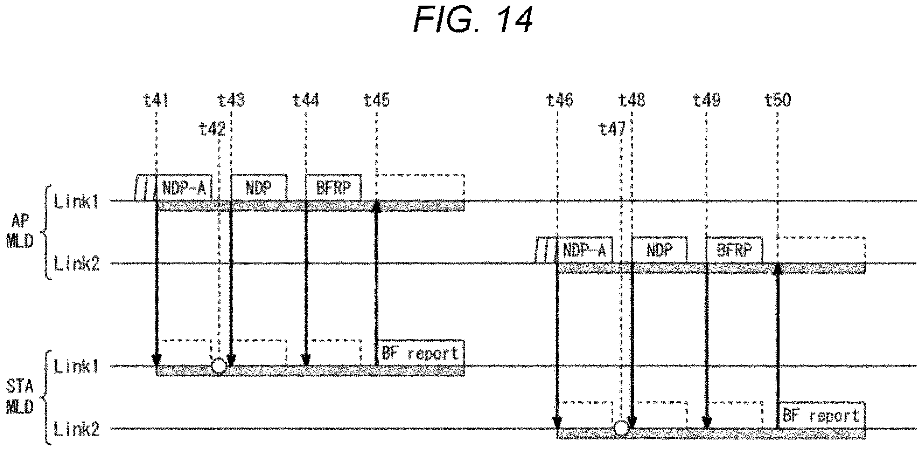

Fig. 14 is a diagram illustrating a sounding sequence to which the present technology is applied.

Fig. 14 illustrates an example of a case where sounding is performed on a single link in the wireless communication system of Fig. 1.

Note that the configuration and operation of a device according to the second embodiment are similar to those of the first embodiment, and thus the description thereof will be omitted.

In a case where sounding is performed on a STA MLD group including STA MLDs in the EMLMR mode, AP MLD transmits NDP-A to which antenna operation information is added on Link1 at time t41. At this time, AP MLD sets NAV on Link1 until sounding is completed. STA1 belonging to STA MLD in the EMLMR mode receives NDP-A transmitted from AP MLD on Link1.

At time t42, STA MLD in the EMLMR mode switches the operation of the antenna 41 such that the antenna 41 operates on Link1 on the basis of on information described in the NDP-A frame transmitted from AP MLD. At this time, STA MLD in the EMLMR mode sets NAV on Link1 until sounding is completed on the basis of the information described in the NDP-A frame.

After the transmission of the NDP-A frame, AP MLD transmits an NDP frame on Link1 at time t43. STA1 belonging to STA MLD receives the NDP frame transmitted from AP MLD on Link1, and acquires channel information by using the NDP frame.

At time t44, AP MLD transmits the BFRP frame on Link1 and requests STA MLD to transmit the acquired channel information. STA1 belonging to STA MLD in the EMLMR mode receives the transmitted BFRP frame on Link1.

At time t45, STA MLD in the EMLMR mode transmits, on Link1, a BF report frame which is a response of the BFRP frame transmitted at time t44.

At time t46, AP MLD transmits, on Link2, the NDP-A frame to which the antenna operation information is added. At this time, AP MLD sets NAV on Link2 until sounding is completed. STA2 belonging to STA MLD in the EMLMR mode receives NDP-A frame transmitted from AP MLD on Link2.

At time t47, STA MLD in the EMLMR mode switches the operation of the antenna 41 such that the antenna 41 operates on Link2 on the basis of on information described in the NDP-A frame transmitted from AP MLD. At this time, STA MLD in the EMLMR mode sets NAV on Link2 until sounding is completed on the basis of the information described in the NDP-A frame.

After the transmission of the NDP-A frame, AP MLD transmits an NDP frame on Link2 at time t48. STA2 belonging to STA MLD receives the NDP frame transmitted from AP MLD on Link2, and acquires channel information by using the NDP frame.

At time t49, AP MLD transmits the BFRP frame on Link2 and requests STA MLD to transmit the acquired channel information. STA2 belonging to STA MLD in the EMLMR mode receives the transmitted BFRP frame on Link2.

At time t50, STA MLD in the EMLMR mode transmits, on Link2, a BF report frame which is a response of the BFRP frame transmitted at time t49.

Since the antenna operation information is transmitted to STA MLD as described above, STA MLD can determine whether or not sounding to be performed by AP MLD is sounding in the EMLMR mode, unlike the related art described above with reference to Fig. 5.

Therefore, since sounding in the EMLMR mode can be performed, the efficient sounding can be implemented.

### <5. Others>

### <Effects of present technology>

As described above, in the present technology, the transmission of the antenna operation information, which is information regarding the operation of the antenna for sounding in the EMLMR mode, to the wireless communication terminal is controlled.

Thus, sounding in the EMLMR mode can be performed. Therefore, the efficient sounding can be realized.

### <Configuration example of computer>

The series of processing described above can be executed by hardware or by software. In a case where the series of processing is performed by software, a program constituting the software is installed from a program recording medium to a computer incorporated in dedicated hardware, a general-purpose personal computer, or the like.

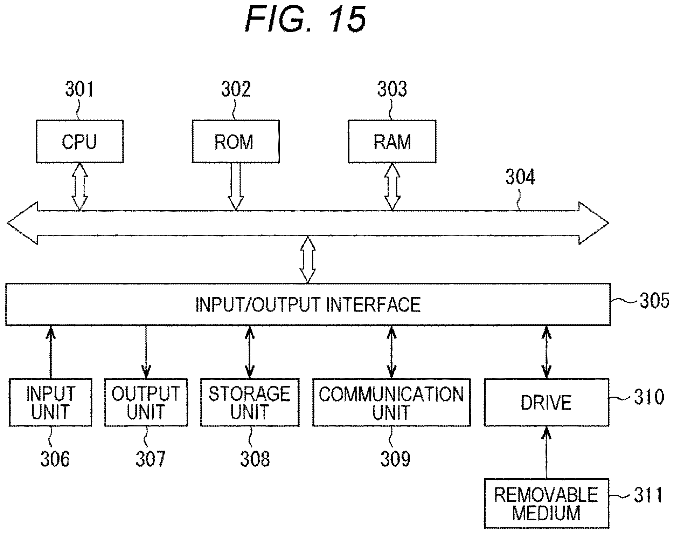

Fig. 15 is a block diagram illustrating a configuration example of hardware of the computer that executes the series of processing described above according to the program.

A central processing unit (CPU) 301, a read only memory (ROM) 302, and a random access memory (RAM) 303 are mutually connected by a bus 304.

Moreover, the bus 304 is connected to an input/output interface 305. An input unit 306 including a keyboard and a mouse, and an output unit 307 including a display and a speaker are connected to the input/output interface 305. Furthermore, the input/output interface 305 is connected to a storage unit 308 including a hard disk and a non-volatile memory, a communication unit 309 including a network interface, and a drive 310 that drives a removable medium 311.

In the computer configured as described above, for example, the CPU 301 loads a program stored in the storage unit 308 into the RAM 303 via the input/output interface 305 and the bus 304, and executes the program to perform the above-described series of processing.

The program to be executed by the CPU 301 is provided, for example, by being recorded in the removable medium 311 or via a wired or wireless transmission medium such as a local area network, the Internet, or digital broadcasting, and is installed in the storage unit 308.

Note that the program executed by the computer may be a program for processing in time series in the order described in the present specification, or a program for processing in parallel or at a necessary timing such as when a call is made.

Note that in the present specification, a system means a set of a plurality of constituents (devices, modules (components), and the like), and it does not matter whether or not all the constituents are in the same housing. Therefore, a plurality of devices housed in separate housings and connected via a network and one device in which a plurality of modules is housed in one housing are both systems.

Furthermore, the effect described in the present specification is a merely example and is not limited, and there may also be other effects.

Embodiments of the present technology are not limited to the above-described embodiments, and various modifications can be made within a scope not departing from the gist of the present technology.

For example, the present technology can be configured as cloud computing in which one function is shared by a plurality of devices through a network for processing in cooperation.

Furthermore, each step described in the above-described flowchart can be executed by one device or executed by a plurality of devices in a shared manner.

Moreover, in a case where a plurality of processing is included in one step, the plurality of processing included in one step can be executed by one device or by a plurality of devices in a shared manner.

### <Combination examples of configurations>

The present technology can also be configured as follows.
(1) A wireless communication device including
   a communication control unit configured to control transmission of antenna operation information to a wireless communication terminal, the antenna operation information being information regarding operation of an antenna for sounding in an enhanced multi-link multi-radio (EMLMR) mode.
(2) The wireless communication device according to (1), in which
   the antenna operation information includes at least one piece of information indicating the sounding in the EMLMR mode, information indicating a link on which the sounding is performed, or information specifying on which link an antenna not used for the sounding is operated.
(3) The wireless communication device according to (1) or (2), in which
   the antenna operation information includes information indicating that the wireless communication terminal in the EMLMR mode is included in the wireless communication terminal.
(4) The wireless communication device according to any one of (1) to (3), in which
   the antenna operation information includes information indicating continuation of the sounding.
(5) The wireless communication device according to any one of (1) to (4), in which
   the communication control unit performs control such that the antenna operation information is included in a notification signal for notifying transmission of a signal necessary for the sounding and transmitted.
(6) The wireless communication device according to any one of (1) to (4), in which
   the communication control unit performs control such that the antenna operation information is included in a request signal for requesting the wireless communication terminal in the EMLMR mode to switch the link and transmitted.
(7) The wireless communication device according to (6), in which
   the antenna operation information includes information indicating a length of a difference between a length of NAV of the wireless communication terminal under control on a certain link and a current time of Time stamp.
(8) The wireless communication device according to (6) or (7), in which
   the antenna operation information includes information requesting transmission of NAV information on a certain link.
(9) The wireless communication device according to any one of (6) to (8), in which
   the antenna operation information includes information indicating completion of the sounding.
(10) A wireless communication method including
   by a wireless communication device,
   controlling transmission of antenna operation information to a wireless communication terminal, the antenna operation information being information regarding operation of an antenna for sounding in an enhanced multi-link multi-radio (EMLMR) mode.
(11) A wireless communication terminal including
   a communication control unit configured to switch operation of an antenna on the basis of antenna operation information which is information regarding operation of the antenna for sounding in an enhanced multi-link multi-radio (EMLMR) mode, the information being transmitted from a wireless communication device.
(12) The wireless communication terminal according to (11), in which
   the antenna operation information includes at least one piece of information indicating the sounding in the EMLMR mode, information indicating a link on which the sounding is performed, or information specifying on which link an antenna not used for the sounding is operated.
(13) The wireless communication terminal according to (11) or (12), in which
   the antenna operation information includes information indicating that the wireless communication terminal in the EMLMR mode is included in the wireless communication terminal.
(14) The wireless communication terminal according to any one of (11) to (13), in which
   the antenna operation information includes information indicating continuation of the sounding.
(15) The wireless communication terminal according to any one of (11) to (14), in which
   the antenna operation information is included in a notification signal for notifying transmission of a signal necessary for the sounding and transmitted.
(16) The wireless communication terminal according to any one of (11) to (14), in which
   the antenna operation information is included in a request signal for requesting the wireless communication terminal in the EMLMR mode to switch the link and transmitted.
(17) The wireless communication terminal according to (16), in which
   the antenna operation information includes information indicating a length of a difference between a length of NAV of the wireless communication terminal under control on a certain link and a current time of Time stamp.
(18) The wireless communication terminal according to (16) or (17), in which
   the antenna operation information includes information requesting transmission of NAV information on a certain link.
(19) The wireless communication terminal according to any one of (16) to (18), in which
   the antenna operation information includes information indicating completion of the sounding.
(20) A wireless communication method including
   by a wireless communication terminal,
   switching operation of an antenna on the basis of antenna operation information which is information regarding operation of the antenna for sounding in an enhanced multi-link multi-radio (EMLMR) mode, the information being transmitted from a wireless communication device.

### REFERENCE SIGNS LIST

- 11: Wireless communication device
- 31: Communication unit
- 41, 41-1, 41-2: Antenna
- 54: Data processing unit
- 51, 51-1, 51-2: Amplification unit
- 52, 52-1, 52-2: Wireless interface unit
- 53, 53-1, 53-2: Signal processing unit
- 55: Communication control unit
- 54: Communication storage unit
- 61, 61-1, 61-2: Individual data processing unit
- 62: Common data processing unit
- 71, 71-1, 71-2: Individual control unit
- 72: Common control unit

## Claims

1. A wireless communication device comprising
a communication control unit configured to control transmission of antenna operation information to a wireless communication terminal, the antenna operation information being information regarding operation of an antenna for sounding in an enhanced multi-link multi-radio (EMLMR) mode.

2. The wireless communication device according to claim 1, wherein
the antenna operation information includes at least one piece of information indicating the sounding in the EMLMR mode, information indicating a link on which the sounding is performed, or information specifying on which link an antenna not used for the sounding is operated.

3. The wireless communication device according to claim 2, wherein
the antenna operation information includes information indicating that the wireless communication terminal in the EMLMR mode is included in the wireless communication terminal.

4. The wireless communication device according to claim 2, wherein
the antenna operation information includes information indicating continuation of the sounding.

5. The wireless communication device according to claim 2, wherein
the communication control unit performs control such that the antenna operation information is included in a notification signal for notifying transmission of a signal necessary for the sounding and transmitted.

6. The wireless communication device according to claim 2, wherein
the communication control unit performs control such that the antenna operation information is included in a request signal for requesting the wireless communication terminal in the EMLMR mode to switch the link and transmitted.

7. The wireless communication device according to claim 6, wherein
the antenna operation information includes information indicating a length of a difference between a length of NAV of the wireless communication terminal under control on a certain link and a current time of Time stamp.

8. The wireless communication device according to claim 6, wherein
the antenna operation information includes information requesting transmission of NAV information on a certain link.

9. The wireless communication device according to claim 6, wherein
the antenna operation information includes information indicating completion of the sounding.

10. A wireless communication method comprising
by a wireless communication device,
controlling transmission of antenna operation information to a wireless communication terminal, the antenna operation information being information regarding operation of an antenna for sounding in an enhanced multi-link multi-radio (EMLMR) mode.

11. A wireless communication terminal comprising
a communication control unit configured to switch operation of an antenna on a basis of antenna operation information which is information regarding operation of the antenna for sounding in an enhanced multi-link multi-radio (EMLMR) mode, the information being transmitted from a wireless communication device.

12. The wireless communication terminal according to claim 11, wherein
the antenna operation information includes at least one piece of information indicating the sounding in the EMLMR mode, information indicating a link on which the sounding is performed, or information specifying on which link an antenna not used for the sounding is operated.

13. The wireless communication terminal according to claim 12, wherein
the antenna operation information includes information indicating that the wireless communication terminal in the EMLMR mode is included in the wireless communication terminal.

14. The wireless communication terminal according to claim 12, wherein
the antenna operation information includes information indicating continuation of the sounding.

15. The wireless communication terminal according to claim 12, wherein
the antenna operation information is included in a notification signal for notifying transmission of a signal necessary for the sounding and transmitted.

16. The wireless communication terminal according to claim 12, wherein
the antenna operation information is included in a request signal for requesting the wireless communication terminal in the EMLMR mode to switch the link and transmitted.

17. The wireless communication terminal according to claim 16, wherein
the antenna operation information includes information indicating a length of a difference between a length of NAV of the wireless communication terminal under control on a certain link and a current time of Time stamp.

18. The wireless communication terminal according to claim 16, wherein
the antenna operation information includes information requesting transmission of NAV information on a certain link.

19. The wireless communication terminal according to claim 16, wherein
the antenna operation information includes information indicating completion of the sounding.

20. A wireless communication method comprising
by a wireless communication terminal,
switching operation of an antenna on a basis of antenna operation information which is information regarding operation of the antenna for sounding in an enhanced multi-link multi-radio (EMLMR) mode, the information being transmitted from a wireless communication device.
